# EUROPEAN PATENT APPLICATION

(11) **EP 1 118 453 A1**
(43) Date of publication of application: **25.07.2001**
(21) Application number: 00100920.8
(22) Date of filing: 18.01.2000
(51) Int. Cl.: B29D 9/00, B32B 3/26, B32B 27/32, B32B 27/20, B29C 55/14, C08K 3/26, C08L 23/12

(54) **A process using single screw extruder for producing a three layer co-extrusion biaxially oriented polypropylene synthetic paper of thickness 25-250um**

(71) Applicant: NAN YA PLASTICS CORPORATION, Taipei (TW)
(72) Inventor: Lin, Allen Fong-Chin, Taipei (TW)
(74) Representative: Grünecker, Kinkeldey, Stockmair & Schwanhäusser Anwaltssozietät

(57) **Abstract**

Disclosed is an improvement of a process for producing a three layers co-extrusion biaxally polypropylene (BOPP) synthetic paper of thickness 25∼250 µm, which is manufactured by using three single screw extruders. Two different PP resin compositions are separately extruded by one primary single screw extruder with venting device and two secondary single screw extruders with venting device first, and then are co-flowed by the same T-die to form a three layers coating sheet; and through cooling, biaxial orientation, corona treatment and winding to form a three layers co-extrusion synthetic paper of thickness 25∼250 µm. The three layers structure of said three layers co-extrusion synthetic paper of thickness 25∼250 µm can be made into three kinds, such as: paper sheet layer/ foamed intermediate layer/ paper sheet layer with double side paper sheet layer, paper sheet layer/ foamed intermediate layer/ resin layer with single side paper sheet layer and resin layer/ foamed intermediate layer/ resin with double side high gloss resin layer, to use as coating substrate for coating grade synthetic paper.

## Description

### Background of the Invention

### 1 Field of the Invention

This invention relates to an improvement of a process for producing a three layers co-extrusion biaxially polypropylene(hereinafter as BOPP) synthetic paper of thickness 25∼250 µm. More particularly, the invention relates to a process for producing a three layers BOPP synthetic paper by means of three layers co-extrusion wherein two different PP resin compositions are separately extruded by one primary single screw extruder with venting device and two secondary single screw extruders with venting device first, and then are co-flowed by a same T-die to form a three layers coating sheet, and through cooling, biaxial orientation, corona treatment and winding to form a three layers co-extrusion synthetic paper of thickness 25∼250 µm. The three layers structure of said three layers co-extrusion synthetic paper of thickness 25∼250 µm can be made into three kinds, such as: paper sheet layer/ foamed intermediate layer/ paper sheet layer with double side paper sheet layer, paper sheet layer/ foamed intermediate layer/ resin layer with single side paper sheet layer and resin layer/ foamed intermediate layer/ resin with double side high gloss resin layer, to use as coating substrate for coating grade synthetic paper.

### 2. Description of the Related Art

Nowadays the three layers co-extrusion BOPP synthetic paper differs with the polyolefin synthetic paper mainly comprising the basic substrate layer in the intermediate layer, whereon the back surface is laminated with the uniaxially oriented polypropylene (UOPP) containing inorganic fine powder as the paper surface layer (such as disclosed in the Japanese Patent Publication No. 40794/71, Japanese Laid-open Patent Publication No. 141339/81, Japanese Laid-open Patent Publication No. 118437/81 and Japanese Laid-open Patent Publication No, 87225/91, and Taiwan Patent Publication No. 72218). The high strength of paper sheet of the three layers co-extrusion BOPP synthetic paper obtained by these patent processes can prevent the question caused by the paper powder formation during printing process, and owing to the thermal dimensional stability of paper sheet layer is good enough and cost is very low, so these synthetic papers can be sold in wide range.

However it must be improved in some aspects, such as hiding power, heat resistance, total thickness and cost of BOPP synthetic paper to instead the natural pulp in wide applications. The above mentioned applications can be industrialized package usage such as packaging paper, kraft paper and releasing paper etc. Under the consideration not to elevate the cost, BOPP synthetic paper with light weight, waterproof, tear resistance can be used and recycled, while the lamination sheet made of conventional paper and plastic film fail to recycle due to poor water resistance and strength.

Although the above mentioned patent publications have been granted, but there are still some problems to make use of of BOPP synthetic paper in wide applications.

However, the BOPP synthetic paper can be used in various applications. Thus, the problem would be encountered to enhance the hiding power, heat resistance, total thickness of BOPP synthetic paper product. Thus, however, requires improvement from the viewpoint of, for example depending on the total amount of inorganic powder added.

Upon consideration in the dispersion problem of inorganic powder used in the single screw extruder, only masterbatch ready made by dispersing the inorganic powder with resin, melting to knead can be used. The masterbatch mixs with polypropylene resin in the inlet of the extruder, then enter into the extruder to melt and extrude. To encounter the dispersion of the inorganic powder in the stage of masterbatch production, it is usually to use dispersing agent such as coupling agent, calcium stearate to enhance surface treatment onto the inorganic powder, to obtain much better productivity (to avoid film break in the drawing zone) and product appearance, evenness of BOPP synthetic paper. But the masterbatch containing the inorganic powder with dispersing agent incurred and moisture adsorbed may volatile its dispersing agent and moisture into gas under high temperature kneading by using the screw in the extruder. This will cause void formed in the sheet during cooling after extrusion. The existing void also form gas bubble in the product of latter zone drawing. It is necessary to control the formulation condition and processing condition.

### Summary of the Invention

It is a primary object of the present invention to provide an improvement of a process for producing a three layers co-extrusion biaxially polypropylene (hereinafter as BOPP) synthetic paper of thickness 25∼250 µm.

It is another object of the present invention to provide a process for producing a three layers BOPP synthetic paper by means of three layers co-extrusion wherein two different PP resin compositions are separately extruded by one primary single screw extruder with venting device and two secondary single screw extruders with venting device first, and then are co-flowed by a same T-die to form a three layers coating sheet, and through cooling, biaxial orientation, corona treatment and winding to form a three layers co-extrusion synthetic paper of thickness 25∼250 µm.

It is a further object of the present invention to provide three kinds of three layers co-extrusion synthetic paper of thickness 25∼250 µm, such as: paper sheet layer/ foamed intermediate layer/ paper sheet layer with double side paper sheet layer, paper sheet layer/ foamed intermediate layer/ resin layer with single side paper sheet layer and resin layer/ foamed intermediate layer/ resin with double side high gloss resin layer, to use as coating substrate for coating grade synthetic paper.

The inorganic powder may be added in the random manner to meet the need of the product application and quality, the applicant adopt the following two ways to reach this aim, namely to vent away the dispersing agent and moisture in the masterbatch to avoid the abnormality occurs during processing.
(1) First, each ingredients used in the extruder should be pelletized into masterbatch by pelletizer. The pelletizer adopts natural venting means to expel the remaining dispersing agent or moisture, and volatilable ingredient. Then the masterbatch prepared is transferred into extruder for succeding step.
(2) The three single screw extruders used in this process should be changed in screw structure (to make reducing zone) and install new venting device to expel the remained dispersing agent and moisture or volatilable gas. In spite of adding any amount of inorganic powder, there is no hollow void may be found in the sheet obtained after cooling.

The above described improvement ways can reach the aim of meeting quality elevation in hiding power, heat resistance, total thickness of product and cost reduction. It is preferably to adopt the (2) means under the consideration of production cost, raw materials used and storage management.

The BOPP synthetic paper obtained by the venting process of single screw extruder which was manufactured without limitation in adding inorganic powder has much more advantages in quality elevation and cost reduction. This technical feature has not been disclosed in the prior art. The advantageous effects of this invention will be described as follows:
(1) Elevation of hiding power
   The hiding power of BOPP synthetic paper obtained by the biaxial drawing process depends on the adding amount of masterbatch and inorganic powder. If inorganic powder can be largely added, the foaming formation of product in the drawing zone is better enough, and hiding power from light is also good. Consequently, high hiding power can be reached without adding masterbatch or with reducing masterbatch amount used.
(2) Elevation of heat resistance
   Thermal barrier of inorganic powder is better than that of polypropylene resin, preferably used inorganic powder are calcium silicate and talc. Under the circumstance of large amount adding of inorganic powder, this will elevate heat resistance and do good in high foaming formation.
(3) Elevation of total thickness
   The adding amount of inorganic powder and the specific gravity of product have great correlation, and the specific gravity of product is the dominating factor of product thickness determination. If the specific gravity of product can be effectively decreased, the total thickness of product will be elevated.
(4) Cost reduction
   If the adding amount of inorganic powder can be elevated, it can reduce the cost in compounding formulation and the specific gravity of product. Consequently, the cost of synthetic paper in the same area also can be reduced.

The above described advantageous effects of the BOPP synthetic paper obtained by this invention using single screw extruders can be reached to elevate the product quality and to reduce the cost, moreover the BOPP synthetic paper can be widely applied in various industrial package paper sheet.

The BOPP synthetic paper of this invention having three layers structure, which is constructed by paper sheet layer or resin layer/ foamed intermediate layer/ paper sheet layer or resin layer. The PP resin composition used for foamed intermediate layer is extruded by a single screw primary extruder with venting device. While the PP resin composition used for paper sheet layer or resin layer is extruded are extruded by two single screw secondary extruders with venting device. The above mentioned extrudates are co-flowed by a same T-die to co-extrude and form a three layers coating sheet, and through cooling, biaxial orientation, corona treatment, and winding to form a three layers co-extrusion BOPP synthetic paper of double side, single side paper sheet layer and double side resin layer with high gloss.

The PP resin composition used for foamed intermediate layer is extruded by one single screw primary extruder with venting device. The PP resin composition which was composed of the polypropylene (PP) resin of 30∼96 % weight having high crystallinity of isotacticity above 97 %, antistatic agent of 1∼5 % weight, calcium carbonate masterbatch 3∼50 % weight, and titanium oxide masterbatch 0∼15 % weight is uniformly blended into front side of the single screw extruder, and the volatilable gas incurred in the PP resin composition can be expelled by venting device. The PP resin composition was blended to melt toward the intermediate runner of T-die. While the PP resin composition used for paper sheet layer or resin layer are extruded by two single screw secondary extruders with venting device. The PP resin composition which was composed of the polypropylene (PP) resin of 40∼100 % weight, polyethylene resin of 0∼20 % weight, antistatic agent of 0∼5 % weight, calcium carbonate masterbatch of 0∼35 % weight, titanium oxide masterbatch of 0∼20 % weight, antiblocking agent of 0∼5 % weight and ultraviolet ray absorber of 0∼5 % weight is fed into inlet in the front side of the two single screw secondary extruder with venting device and uniformly blended, and the volatilable gas incurred in the PP resin composition can be expelled by venting device. The PP resin composition was blended to melt toward the two outer runner of T-die. The three extrudates extrude from the three single screw extruders were co-flowed through a same T-die in the way of three layers co-extrusion to form the coating sheet of paper sheet layer or resin layer/ foamed intermediate layer/ paper sheet layer or resin layer. Then, the said coating sheet was subjecting to biaxial orientation, corona treatment, winding to form a three layers co-extrusion BOPP synthetic paper of thickness 25∼250 µm with double side, single side paper layer or double side resin layer with high gloss.

For the understanding of technical content of this invention, here provide the description on the aspects including polypropylene resin compositions, process (including extrusion, three layers co-extrusion, cooling, biaxial orientation, corona treatment, winding) as follows.

PP resin used in this invention which having high crystallinity as the essential ingredient to be suitable not only for cultural paper, but also for industrial package paper. The PP resin used in this invention are homopolymer with high crystallinity of melt flow index 0.5 ∼12 (230°C/2.16 kg, ASTM D1238) and most of them are isotactic. Different MFI and molecular weight distribution of PP resin can be chosen to match the drawing ratio in controlling the mechanical strength and thickness evenness. To attain the imitation paper effect of different gloss by using paper sheet layer, it is preferable to choose PE (polyethylene) of MFI 0.1∼14.

The inorganic powder used in this invention mainly plays the function for significantly decreasing the specific gravity, elevating the hiding power, heat resistance and total thickness, and thus provide the paper sheet layer of excellent pen-writing and printability that is superior to conventional synthetic paper. The inorganic powder can be one or more than two selected from the group of calcium carbonate, diatomite, kaolin clay, calcium oxide, barium sulfate and titanium oxide, and the particle size of inorganic powder ranges from 0.1 to 10 µm, the used amount depends on the physical properties required. The inorganic powder used in this invention should be made into masterbatch before processing, kind and concentration of dispersing agent used in the masterbatch also depends on the kind of inorganic powder and product application. Titanium oxide masterbatch also can be used to provide the function for adjusting the opaqueness, whiteness of synthetic paper and enhancing the effect of ultraviolet resistance, this also depends on product application.

The antistatic agent used in this invemtion could be the same as those used in the BOPP, in which tertiary amine, amide preferably used can eliminate the static effect caused in the coating process.

In order to prevent the mutual adhesion between the coating layers from ocurring while coating and winding process, the antiblocking agent is required, and generally it may be such as silica, clay, polymethyl methacrylate(PMMA), and glass bead.

The specific gravity of BOPP synthetic paper obtained by this invention is fallen into the range of 0.5∼0.89, this can be adjusted in formulation of PP composition according to the product application and cost. It is intended to let the consumer to use more area in the same unit weight of product.

Three layers structure of the BOPP synthetic paper obtained by this invention is paper sheet layer or resin layer/ foamed intermediate layer/ paper sheet layer or resin layer as described above, the physical properties, productivity depend on the formulation, equipment, operation condition required. Be able to add large amount of inorganic powder to enhance the production of BOPP synthetic paper is the characteristic feature of this invention, and this has not been reached by prior art and become the great task for one skilled in the art, especially in biaxial orientation drawing process. BOPP synthetic paper of thickness 25∼250 µm in single, double side matted paper sheet layer and two side high gloss paper sheet layer can be obtained by the process shown in the accompanying drawing. The device, steps used can be described as follows.

To achieve the above objects, and novel features of the invention will become more apparent from the following detailed description when taken in conjunction with the accompanying drawings.

### Brief Description of the Drawings

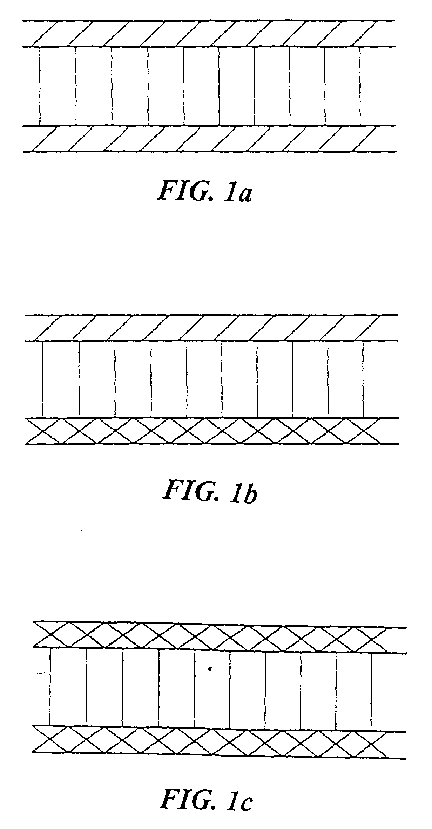

FIG. 1 shows a cross section view showing three kinds of three layers coextrusion BOPP synthetic paper according to this invention by using single screw extruder for producing a three layers coextrusion BOPP synthetic paper of thickness 25∼250 µm.

FIG. 1a shows BOPP synthetic paper structure of paper sheet layer/ foamed intermediate layer/ paper sheet layer with double side paper sheet layer.

FIG. 1b shows BOPP synthetic paper structure of paper sheet layer/ foamed intermediate layer/ resin layer with single side paper sheet layer.

FIG.1c shows BOPP synthetic paper structure of resin layer/ foamed intermediate layer/ resin layer with double side high gloss resin layer.

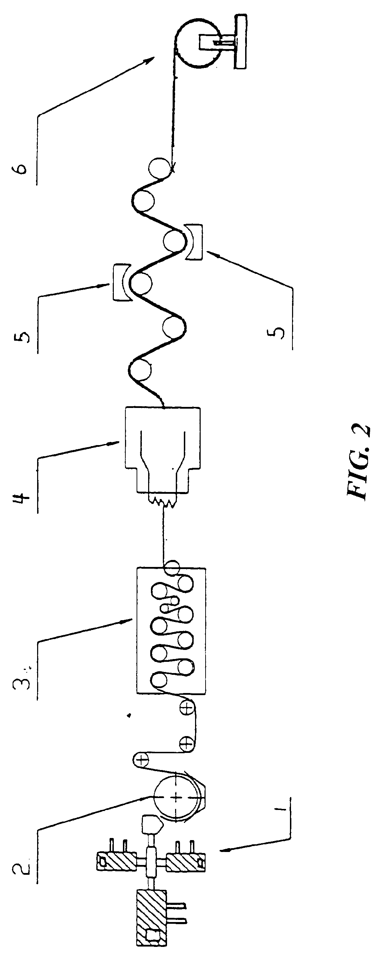

FIG. 2 shows the processing device of this invention, wherein numeral 1 indicates extruder; 2 indicates cooling and shaping roller; 3 indicates longitudinal orientation; 4 indicates lateral orientation device; 5 indicates corona treatment device; 6 indicates winding device.

The device in pursuance of the process of this invention are further described as follows:

### 1.Extruder:

The extruder comprises one single screw primary extruder with sucking device and two single screw secondary extruders with venting device whose temperature conditions vary with the ingredients of the resin composition, MFI(melt flow index), crystallinity, viscosity, additive and production line speed(winding speed) that normally set in the range between 180∼280°C, and the vacuum degree is always set in the range of 0∼760 mm Hg.

### Cooling and shaping roller:

The roller adopts the water cooling device to cool and form the three layers coextrudate of high temperature between 180°C and 280°C. The control of cooling temperature in the step is quite important, which dominates the success of the following steps. The cooling temperature is normally set at 15∼65°C being adjustable depending on the thickness of synthetic paper and the speed of production line.

### 3. Longitudinal orientation device:

The cooled and formed sheet is fed in this device for preheating to soften the paper sheet at 115∼150°C (depending on the thickness of paper sheet and the speed of production line), and then be oriented in two steps with low and high speed so as to enhance the longitudinal mechanical strength of coating layer which being then tempered and formed. In general, the longitudinal draw ratio is set at 3∼6 times.

### Lateral orientation device:

The thinner paper sheet formed through the foregoing longitudinal orientation treatment is preheated and softened at 140∼195°C (depending on the thickness of paper sheet and speed of production line) and then laterally oriented and finally tempered and formed so as to partially reduce the dimension of coating layer for its stability. Generally, the lateral drawing ratio is set at 5∼12 times depending on the product requirement.

### Corona treatment device:

This treatment is to improve the surface characteristics of BOPP synthetic paper suitable for various applications, such as printing, coating, sizing and laminating. For one side or two side corona treatment, a high frequency discharging device with power of 20∼120 KW is used(depends on the speed of production line) so as to obtain a surface wetting tension of 36∼48 dyne/cm.

### Winding device:

The coating layer of this invention is taken up to be a end product with 8 meters in width by a tubular device, and then can be striped into thickness of 25∼250 µm rolled or sheeted product.

The thickness proportion in the three layers BOPP synthetic paper obtained by this invention can be shown as follows:

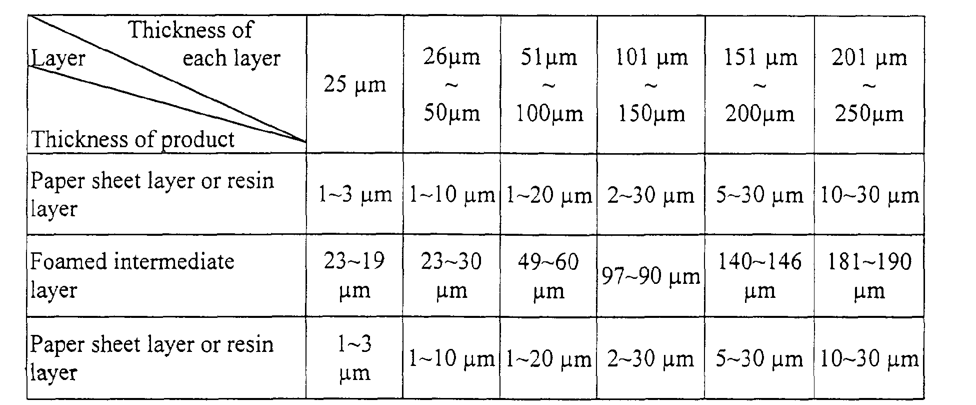

The thickness of paper sheet layer and resin layer can be fallen into the range of 1∼30 µm, this can be adjusted as product requirement.

### Detailed Description of the Preferred Embodiment

In order to understand the technical feature of this inventi9n, various characteristics and applications of three layers BOPP synthetic paper made from PP resin compositions is shown as embodiment examples. Some embodiment examples will be illustrated in more details by reference. This includes the production of writing, printing, packaging and various applications of BOPP synthetic paper. However, these examples can not be explained as limitations of the scope of this invention.

Embodiment Example 1: BOPP synthetic paper with single side paper sheet layer of thickness below 250 µm(samples 1,2,3 enclosed) PP resin (MFI=2.0) of 69 % weight, antistatic agent of 3 % weight, calcium carbonate masterbatch of 20 % weight, and titanium oxide masterbatch of 8 % weight are mixed and fed into the inlet of the single screw primary extruder with venting device. On the other way, PP resin (MFI=2.4) of 60 % weight, PE(polyethylene) resin (MFI=1) of 11 % weight, antistatic agent of 2 % weight, antiblocking agent of 1 % weight, titanium oxide masterbatch of 5 % weight, calcium carbonate masterbatch of 20 % weight, and ultraviolet absorbent of 1 % weight are mixed by a mixer and fed into the inlet of No. 1 single screw secondary extruder with venting device to knead and vent, in the meanwhile, PP resin(MFI=2.4) of 97 % weight, antistatic agent of 3 % weight are mixed and fed into the inlet of No. 2 single screw secondary extruder with venting device to knead . At the extruder temperature of 200 ∼280°C, these mixtures are extruded through the same one T-die by means of three layers coextrusion. At the temperature of cooling rollers set at 15 ∼ 60°C, the PP coating sheet is cooled and shaped, then preheated at 120∼150°C and fed into the lateral orientation device for drawing 5 times in lateral orientation, then tempered and cooled, preheated to enter into a longitudinal orientation device whose temperature set at 150∼185°C for drawing 9 times in longitudinal orientation, then tempered and cooled to control the good printability, coating and lamination of the thus obtained three layers synthetic paper, and taken up by winding device. BOPP synthetic paper with single side sheet layer of thickness below 250 µm can be manufactured by the above method, and used in various applications to instead kraft paper, art paper or releasing paper with PE film casted for coating substrate, furthermore it can be widely applied in printing, pen writing, and packaging application. The physical properties of BOPP synthetic paper with single side sheet layer in three different thickness of 80 µm(see attached sample 1), 100 µm(see attached sample 2), 120 µm(see attached sample 3) made by this embodiment example are shown as following table.

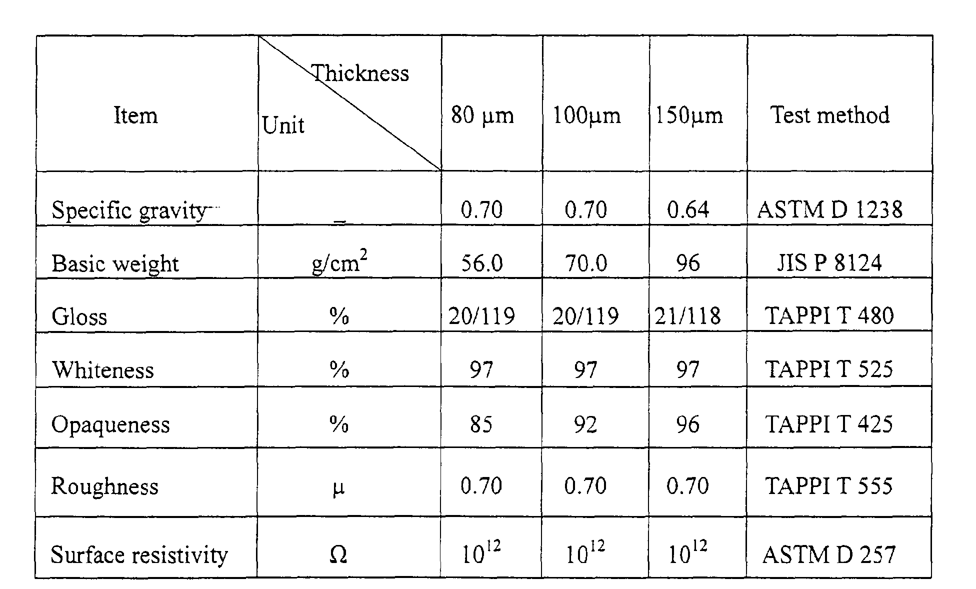

Embodiment Example 2: BOPP synthetic paper with double side high gloss paper sheet layer of thickness 70 µm, manufactured by adding large amount of inorganic powder

PP resin (MFI=1.6) of 52 % weight, antistatic agent of 3 % weight, and calcium carbonate masterbatch of 45 % weight are mixed and fed into the inlet of the single screw primary extruder with venting device. On the other way, PP resin (MFI=2.4) of 94 % weight, antistatic agent of 2 % weight, antiblocking agent of 1 % weight and ultraviolet absorbent of 2 % weight are mixed by a mixer and fed into the inlet of No. 1, No.2 single screw secondary extruder with venting device to knead and vent. In the meanwhile, at the extruder temperature of 200 ∼280°C, and vacuum degree to -700 mm Hg, these mixtures are extruded through the same one T-die by means of three layers coextrusion. At the temperature of cooling rollers set at 15 ∼ 60°C, the PP coating sheet is cooled and shaped, then preheated at 120∼150°C and fed into the lateral orientation device for drawing 5.5 times in lateral orientation, then tempered and cooled, preheated to enter into a longitudinal orientation device whose temperature set at 150∼185°C for drawing 9 times in longitudinal orientation, then tempered and cooled to control the good printability, coating and lamination of the thus obtained three layers synthetic paper, and taken up by winding device. The specific gravity of BOPP synthetic paper with double side sheet layer of thickness 70 µm manufactured by the above method is extremely low, can be used to substitute package application of reinforced kraft paper bag, which is laminated with PE or PP woven bag in both side by casting PE layer thereon. The above mentioned reinforced kraft paper bag is usually used for the packaging of raw material., fertilizer and cement. The physical properties of BOPP synthetic paper with double side high gloss paper sheet layer of thickness 70 µm (see attached sample 4) made by this embodiment example are shown as following table.

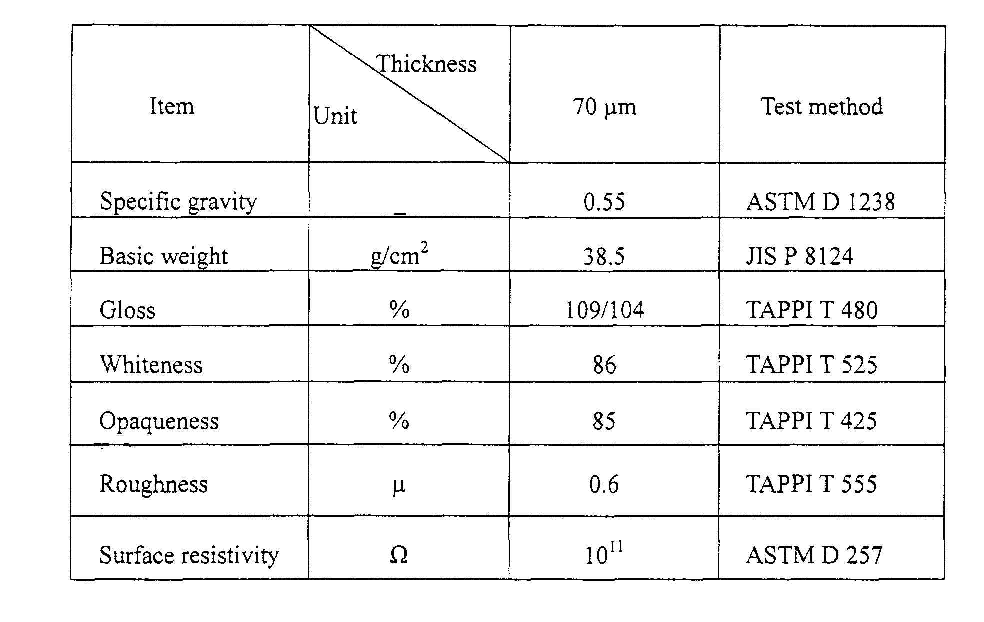

Embodiment Example 3: BOPP synthetic paper with double side matted paper sheet layer of thickness 120 µm, manufactured by adding large amount of inorganic powder

PP resin (MFI=1.6) of 52 % weight, antistatic agent of 3 % weight, and calcium carbonate masterbatch of 45 % weight are mixed and fed into the inlet of the single screw primary extruder with venting device. On the other way, PP resin (MFI=2.4) of 60 % weight, antistatic agent of 2 % weight, PE resin of 11% weight, calcium carbonate masterbatch of 20 % weight, and titanium oxide masterbatch of 7 % weight are mixed by a mixer and fed into the inlet of No. 1, No.2 single screw secondary extruder with venting device to knead and vent. In the meanwhile, at the extruder temperature of 200 ∼280°C, and vacuum degree to -750 mm Hg, these mixtures are extruded through the same one T-die by means of three layers coextrusion. At the temperature of cooling rollers set at 15 ∼ 60°C, the PP coating sheet is cooled and shaped, then preheated at 120∼150°C and fed into the lateral orientation device for drawing 4.5 times in lateral orientation, then tempered and cooled, preheated to enter into a longitudinal orientation device whose temperature set at 150∼190°C for drawing 9 times in longitudinal orientation, then tempered and cooled to control the good printability, coating and lamination of the thus obtained three layers synthetic paper, and taken up by winding device. The specific gravity of BOPP synthetic paper with double side matted paper sheet layer of thickness 70 µm manufactured by the above method is extremely low, can be used for printing name card and front cover of book. The physical properties of BOPP synthetic paper with double side matted paper sheet layer of thickness 120 µm (see attached sample 5) made by this embodiment example are shown as following table.

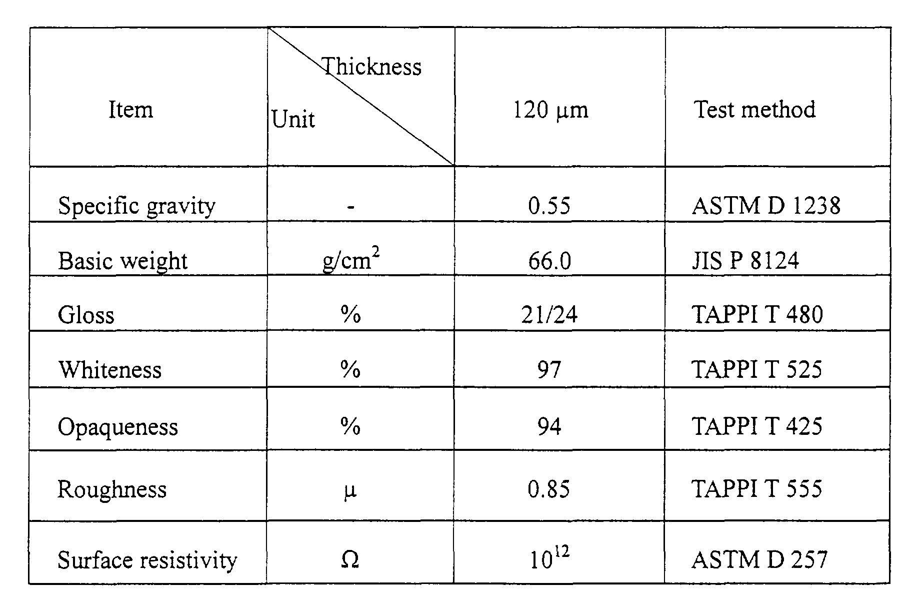

Although the invention has been explained in relation to its preferred embodiment, it is to be understood that many other possible modifications and variations can be made without departing from the spirit and scope of the invention as hereinafter claimed.

## Claims

1. A process using single screw extruder for producing a three layer co-extrusion biaxially polypropylene synthetic paper of thickness 25 ∼ 250µm, whichis characterized in that the PP resin composition used for formed intermediate layer was extruded by one single screw primary extruder with venting device, the said PP resin composition which was composed of the polypropylene (PP) resin of 30∼96 % weight having high crystallinity of isotacticity above 97 %, antistatic agent of 1∼5 % weight, calcium carbonate masterbatch 3∼50 % weight, and titanium oxide masterbatch 0∼15 % weight is uniformly blended into front side of the single screw extruder, while the PP resin composition used for paper sheet layer or resin layer were extruded by two single screw secondary extruders with venting device, the said PP resin composition used for these two single screw secondary extruders which was composed of the polypropylene (PP) resin of 40∼100 % weight, polyethylene resin of 0∼20 % weight, antistatic agent of 0∼5 % weight, calcium carbonate masterbatch of 0∼35 % weight, titanium oxide masterbatch of 0∼20 % weight, antiblocking agent of 0∼5 % weight and ultraviolet ray absorber of 0∼5 % weight was fed into inlet in the front side of the two single screw secondary extruder with venting device and uniformly blended, and the volatilable gas incurred in the said PP resin composition can be expelled by venting device; the PP resin composition used for formed intermediate layer was extruded to melt toward the intermediate runner of T-die, while the PP resin composition used for foamed intermediate layer were extruded to melt toward the two outer runner of T-die; these three extrudates from the three separate single screw extruders at temoerature 180 ∼ 280°C and vacuum degree of 0 ∼ 750 mmHg were co-flowed through a same T-die in the way of three layers co-extrusion to form the coating sheet of paper sheet layer or resin layer/foamed intermediate layer/ paper sheet layer or resin layer, and the said coating sheet was cooled and formed at 15 ∼ 65°C, then subjected to biaxial orientation; the said biaxial orientation which comress the steps of preheating at 115 ∼ 150°C, drawing, and tempering in the manner of 3 ∼ 6 times draw ratio of longitudinal orientation, and preheating at 140 ∼ 195°C, then drawing and tempering in the manner of 5 ∼ 12 times draw ratio of lateral orientation, and subjecting to high frequency corona treatment with 20 ∼ 120KW power, then taking up by winding device to form a three layers co-extrusion biaxially oriented synthetic paper of thickness 25∼250 µm, in which the said three layers structure of said BOPP synthetic paper in the form of paper sheet layer/formed intermediate layer/paper sheet layer, paper sheet layer, paper sheet layer/formed intermediate/resin layer with single side paper sheet layer, resin layer/formed intermediate layer/resin layer with double side high gloss layer.
